Europäisches Patentamt

European Patent Office

Office européen des brevets

(19)

(11) **EP 1 179 298 A2**

(12) **EUROPEAN PATENT APPLICATION**

(43) Date of publication:
**13.02.2002 Bulletin 2002/07**

(51) Int Cl.[7]: **A23L 1/0522**, A23L 1/164,
A21D 2/18

(21) Application number: **01118746.5**

(22) Date of filing: **07.08.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **07.08.2000 US 223361 P
15.06.2001 US 882123**

(71) Applicant: **National Starch and Chemical
Investment Holding Corporation
New Castle, Delaware 19720 (US)**

(72) Inventors:
• **Huang, David P.
Bound Brook, New Jersey 08805 (US)**

• **Hanchett, Douglas J.
Wharton, New Jersey 07885 (US)**
• **Bragg, Veronica M.
Jamesburg, New Jersey 08831 (US)**
• **Tayal, Akash
Somerset, New Jersey 08873 (US)**
• **Setiady, Winny
Somerville, New Jersey 08876 (US)**

(74) Representative:
**Held, Stephan, Dr.rer.nat., Dipl.-Chem. et al
Patentanwälte, Hagemann, Braun und Held,
Postfach 86 03 29
81630 München (DE)**

(54) **Pregelatinized starches for improved snack products**

(57)    The present invention is directed to a process for producing an unexpectedly workable dough via the use of pregelatinized amylose-containing starches, as well as the products produced therefrom. The invention also includes the pregelatinized amylose-containing starches characterized by specific rheological properties.

EP 1 179 298 A2

**Description**

**BACKGROUND OF THE INVENTION**

The present invention is directed to a process for producing an unexpectedly workable dough via the use of pregelatinized amylose-containing starches, as well as the products produced therefrom. The invention also includes the pregelatinized amylose-containing starches characterized by specific rheological properties.

Starch behavior in baked products is a function of the type of flour used, the product formulation (i.e., the other ingredients such as salts, sugars, emulsifiers, and shortening), processing conditions and final preparation, including but not limited to, baking or frying requirements. The addition of modified starches to baked goods can provide desirable moisture retention and textures to the final products as well as improving the cell structure, providing increased volume and machinability, enhanced shelf life and good particle suspension properties.

The addition of a pregelatinized starch helps bind moisture, thus providing improved tenderness in the final product and contributing to the development of a fine uniform cell structure. In certain low or no gluten-containing systems, such as masa, such a starch may be used as a continuous matrix binder to provide a workable dough.

In general, it has been accepted that waxy starches having high amylopectin content have provided the best dough and baked or fried chip products in low or no gluten-containing systems because they improve overall dough workability and chip expansion. U.S. Patent No. 5,429,834, for example, describes the use of a pregelatinized waxy starch, useful in forming a machinable, cohesive dough suitable for use in baked or fried snack products.

By contrast, amylose-containing starches generally form doughs having dry, crumbly and broken textures, and typically cannot be stretched during machining and further processing. Doughs incorporating amylose-containing starches have required special processing or combinations of modified starches in order to achieve a commercially suitable product. In U.S. Patent No. 4,873,093, for example, a "dough-like" texture is obtained by steaming a composition containing native, non-pregelatinized starch while it is kneaded. The "dough" is then machined and worked into its final form.

Other known processes combine a non-pregelatinized starch with an at least partially pregelatinized starch in order to produce a workable dough. For example, U.S. Patent No. 4,623,548 describes a dough prepared by the extrusion of a mixture of a pregelatinized starch, a partially gelatinized cereal flour and a native non-pregelatinized starch. The dough is then fried to form the final product. Patent EP 0847702 A2 describes a dough which may be formed into a sheeted and/or rolled and folded pastry. The dough necessarily contains a non-pregelatinized starch material, a non-waxy pregelatinized starch, water and fat. This formulation contains significant levels of fat [2-7%] which is used to overcome dough texture deficiencies, such as crumbliness and buckiness, in their amylose containing formulation. Such a formulation is baked as a loaf in an oven with the objective of reducing moisture content and producing a partially raised or blistered surface.

There remains a need to provide an amylose containing starch which performs well as a continuous matrix binder and may be processed into a dough which can be machined and shaped or sheeted for a variety of applications, including baked and fried snack applications. Such a dough must be pliable but not sticky and have an elastic quality so as not to crumble, crack or break during the shaping or sheeting process.

The carefully processed pregelatinized amylose-containing starches of the present invention provide doughs having these desirable properties. The properties of these starches are characterized by specific rheological values, including elastic modulus and tangent delta, and provide good moisture retention, all of which contribute to the superior workability and functionality of doughs having specific physical parameters made therefrom.

**SUMMARY OF THE INVENTION**

The present invention is directed to a process for producing an unexpectedly workable dough via the use of pregelatinized amylose-containing starches, as well as the products produced therefrom. The invention also includes the pregelatinized amylose-containing starches characterized by specific rheological properties.

The process of the present invention comprises drum drying a slurry of amylose-containing starch, wherein the cooked starch at 20% starch solids is characterized by a G' at omega = 1 rad/sec of greater than about 200 Pascals ("Pa") and a Tangent delta of greater than about 0.1; and incorporating the pregelatinized starch into a dough having an extension of between about 9 to about 12 mm, a slope of between about 40 to about 60 g/mm, a peak force of between about 100 to about 140 g, and a work area of between about 800 to about 1200 g-mm.

The improved doughs produced thereby produce advantageously workable doughs suitable for use in a number of applications, including but not limted to, use in baked and fried snack products.

## DETAILED DESCRIPTION

The present invention is directed to a process for producing an unexpectedly workable dough via the use of pregelatinized amylose-containing starches, as well as the products produced therefrom. The invention also includes the pregelatinized amylose-containing starches characterized by specific rheological properties.

All starches and flours containing amylose (hereinafter "amylose-containing starch") may be suitable for use herein and may be derived from any native source. A native amylose-containing starch or flour as used herein, is one as it is found in nature. Also suitable are amylose-containing starches derived from a plant obtained by standard breeding techniques including crossbreeding, translocation, inversion, transformation or any other method of gene or chromosome engineering to include variations thereof. In addition, amylose-containing starch or flours derived from a plant grown from artificial mutations and variations of the above generic composition which may be produced by known standard methods of mutation breeding are also suitable herein.

Typical sources for the amylose-containing starches and flours are cereals, tubers, roots, legumes, fruits, stems or trunks. The native source can be corn, pea, potato, sweet potato, banana, barley, wheat rice, sago, amaranth, tapioca, arrowroot, canna, sorghum, and high amylose varieties thereof. Particularly preferred are sago, potato and tapioca.

Conversion products derived from any of the amylose-containing starches, including fluidity or thin-boiling starches prepared by oxidation, enzyme conversion, acid hydrolysis, heat and or acid dextrinization, and or sheared products may also be useful herein.

Chemically modified amylose-containing starches may also be used. Such chemical modifications are intended to include without limitation crosslinked , acetylated and organically esterified amylose-containing starches; hydroxyethylated and hydroxypropylated starches; phosphorylated and inorganically esterified starches; cationic anionic, nonionic and zwitterionic starches; and succinate and substituted succinate derivatives or amylose-containing starch. Such modifications are known in the art, for example in Modified Starches: Properties and Uses, Ed. Wurzburg, CRC Press, Inc., Florida (1986).

The process of the present invention comprises drum drying a slurry of an amylose-containing starch, wherein the amylose-containing starch at a 20% starch solids content is characterized by a G' at omega = 1 rad/sec of greater than about 200 Pa and a tangent delta of greater than about 0.2 ; and incorporating the starch into a dough having a peak force of between about 100 to about 140 g, an extension of between about 9 to about 12 mm, a work area of between about 800 to about 1200 g-mm, and an initial slope of between about 40 to about 60 g/mm.

The starch is prepared by mixing the starch in a solvent, preferably water, to form a slurry in a reaction vessel with good agitation. The concentration of the resultant starch slurry is optimized according to the pumping equipment being used and the specific needs of the material being drum dried. A preferable concentration range is between about 20 to about 24 Baume. The pH of the slurry may be adjusted to between about 3 to about 9, depending upon the attributes of the pregelatinized starch. The slurry is then pumped onto the main drum which is allowed to run until consistent processing conditions are achieved. The dried gelatinized starches are then collected and ground to the desirable particle size.

It is known in the art that one may adjust the variables of slurry concentration, drum temperature, drum speed, pH and type of starch in order to create products with different degrees of cook. In general, low degrees of cook may be obtained by adjusting the slurry to a relatively neutral pH (between pH 5 to 8) and high concentration, increasing the drum speed, and lowering the drum temperature. At the other extreme, a high degree of cook may be produced by adjusting the slurry to low or very high pH and low concentration, lowering the drum speed and increasing the drum temperature. Intermediate degrees of cook may be obtained by adjusting the pertinent variables accordingly.

An amylose-containing starch with a suitable degree of cook at a 20% solids content has a G' of omega = 1 rad/sec of greater than about 200 Pa, particularly above 300 Pa, and a tangent delta of greater than 0.1, particularly between about 0.2 to about 1.0. The G' and tangent delta profiles are measured on starch dispersions obtained from gelatinized starches. Generally, starches having a tangent delta of greater than 1 are known to be fluid-like or viscous. See, for example, Larson, R. G., The Structure and Rheology of complex Fluids, Oxford Press (1999). Conversely, a tangent delta of below 0.1 defines a material which fractures easily. This is illustrated in Example 3 by a pregelatinized corn starch which has a tangent delta of 0.07.

However, it has been discovered that if the tangent delta value of a cooked starch at a 20% solids content is above 0.1, particularly between about 0.2 and about 1, and its G' value is above 200 Pa, particularly 300 Pa, the starch is desirably elastic and unexpectedly suitable for dough applications as a continuous matrix binder. Amylose-containing starches having G' and tangent delta values within this desirable range include, but are not limited to sago and potato.

The pregelatinized amylose-containing starch thus defined is then incorporated into a dough which requires a binder for suitable workability. A dough that is workable possesses an desirable degree of elasticity, without being either extremely tough or extremely malleable. A good dough is not bucky, wet, soft, brittle or sticky. These attributes are provided by a binder which forms a continuous matrix in the dough, with said binder behaving ideally like wheat gluten in a wheat system. The amylose-containing starches of the present invention unexpectedly act as continuous matrix binders, forming a dough with a cohesive texture that is workable and shapeable.

Systems in which the amylose-containing starches of the present invention are unexpectedly useful as a continuous matrix binder include, without limit, corn masa, corn grits, corn meal, legumes (such as chickpeas and lentils), potato flour, potato flakes, potato granules, rice flour, oat flour, bean flour (such as black bean), barley flour, buckwheat flour, tapioca flour, sago flour, and mungbean flour.

In general, the binding ability of various starches may be evaluated by forming masa doughs consisting of 55% masa farina, 35% water and 10% starch, shaping the dough into sheets and measuring pertinent physical parameters of the sheets. The physical parameters of these masa sheets are a measure of the workable properties of the dough. Since masa contains little or no inherent binding properties of its own, these properties are a measure of the ability of the starch to act as a continuous matrix binder in systems ordinarily lacking sufficient binder to form a workable dough.

The physical parameters are determined by measuring the sheet extension of sheeted masa with a TA-XT2 Instrument. The sheet is formed into a dog-bone shape and pulled at a speed of 1 mm/sec for 25 mm. The force of the extension was plotted against distance of extension, and the several useful parameters correlating to dough properties were derived from this data including peak force, extension work area and initial slope.

Peak force is the maximum force that can be exerted on the dough at its maximum extension before break. A high peak force describes a very tough dough. At the other extreme, a dough with a low peak force has a weak quality. Extension is a measure of the stretch and flexibility of the dough. A long extension indicates a wet, stringy dough, unsuitable for machine workability. An excessively short extension results in a dry, bucky dough that fractures easily. Work is the integral of force over distance and thus is a measure of the overall strength of the dough. Initial slope is a measure of the force required to initiate the extension of the dough. The initial slope is a reflection of the Initial hardness. A low initial slope indicates a dough that is unacceptably soft.

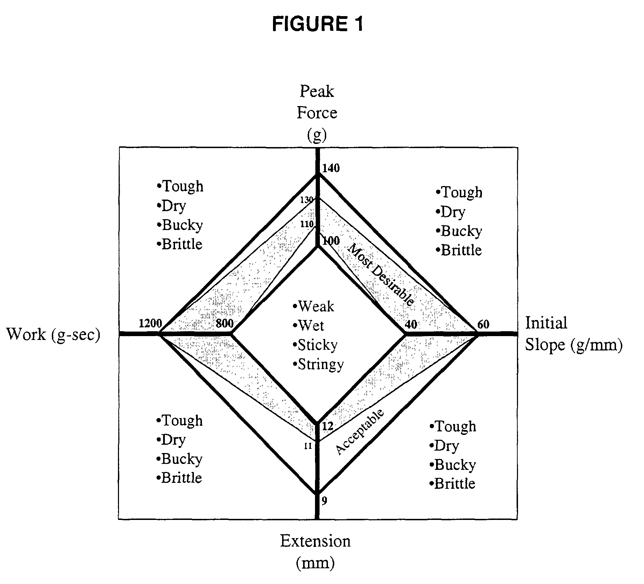

Figure 1 illustrates that doughs having a combination of peak force, slope, and work area values greater than the discovered desirable values and extension values lower than the desirable values are unsuitably tough, dry, bucky and brittle. Conversely, doughs having peak force, slope, and work area values lower than the acceptable values and higher extension values are unsuitable in that they are weak, wet, sticky and stringy and thus unworkable. Doughs having a peak force of between about 100 to about 140 g, particularly between about 110 to about 130 mm; an extension of between about 9 to about 12 mm, particularly between about 11 and about 12 mm; a work area of between about 800 to about 1200 g-mm, and an initial slope of between about 40 to about 60 g/mm form acceptably elastic and workable doughs.

Advantageously, both pregelatinized sago and potato starch drum dried at a pH of 7. characterized by a G' @omega=1 rad/sec greater than about 200 Pa, particularly greater than about 300 Pa, and a tangent delta of greater than about 0.1, particularly between about 0.2 to about 1, measured at a 20% solids content provide a continuous matrix binder exhibiting sufficient elasticity to provide a desirable workable dough. Doughs containing such pregelatinized amylose-containing starches, have peak force, extension, initial slope and work area values characteristic of an excellent workable dough.

Further embodiments of the present invention are described as follows:

1. A process for using an amylose-containing starch in doughs as a suitable continuous matrix binder comprising an amylose-containing starch dispersion at a 20% solids content having a G' @ omega = 1 rad/sec of greater than about 200 Pascals, and a tangent delta of greater than about 0.1.

2. The process of embodiment 1 wherein G' is greater than about 300 Pascals, and tangent delta is between about 0.2 to about 1.0.

3. A process for making a suitable dough comprising adding to the dough an amylose-containing starch wherein the resultant amylose starch-containing dough has a peak force of between about 140 to about 100 g; a slope of between about 40 to about 60 g/mm; an extension of between about 9 to about 12 mm; and a work area of between about 1200 to about 800 g-mm.

4. The process of embodiment 3 wherein the dough has a peak force of between about 130 to about 110 g, and the extension is between about 11 to about 12 mm.

5. The process of embodiment 1 wherein the amylose-containing starch is sago and potato.

6. A process for using the dough of embodiment 1 or 3 in food.

7. The process of embodiment 6 wherein the food is a fried or baked snack.

8. A dough binder comprising an amylose-containing starch at 20% solids content by weight having a G' @omega = 1 rad/sec of greater than about 200 Pascals and a tangent delta of greater than about 0.1.

9. The dough binder of embodiment 8 wherein G' is greater than about 300 Pascals, and tangent delta is between about 0.2 to about 1.0.

The dough binder of embodiment 8 wherein the starch is sago or potato.

The following examples are presented to further illustrate and explain the present invention and should not be taken as limiting in any regard. All parts and percentages are given by weight and all temperatures in degrees Celcius (°C) unless otherwise noted.

**EXAMPLE 1**

This example illustrates the preparation of the amylose-containing starches of the present invention.

With good agitation, 25.44 kg of raw sago starch* was added to 35.67 kg of water resulting in a concentration of 22 Baume. The pH of the slurried starch was adjusted to a of pH about 7.0 with a dilute solution of sodium hydroxide.

The slurry was slowly transferred with a peristaltic pump to the preheated drum (Model #E-5-5. Dedert Corporation), adjusting the rate of slurry addition so that a sausage-shaped band of starch of a consistent size was formed between the main drum and the applicator roll. Steady state conditions were reached 15 minutes. The main drum speed was 6 rotations per minute, the roller nip gaps were0.37 cm, the surface temperature was 168 °C and the steam pressure was between 5.5 to 9.0 kg/cm$^2$.

[0033]    * Generally, the starch may be obtained from unmodified ("raw") or modified starch. The modified starches used herein were prepared according to techniques well known to those of skill in the art of starch polymer science. As used in these Examples, cross-linked sago, refers to sago starch that is treated with 0.02% $POCl_3$ according to the procedure described, for example, in Whistler et al., "Starch Chemistry and Technology", 2$^{nd}$ Ed., Academic Press Inc., 1984, Chapter 10, Section 3, pp. 324-326. Similarly, acid hydrolyzed sago, as used herein, indicates sago starch which has been hydrolyzed to a water fluidity of 17 according to the procedure described, for example, in Whistler et al., "Starch Chemistry and Technology", 2$^{nd}$ Ed., Academic Press Inc., 1984, Chapter 17, Section 3, pp. 536.

**EXAMPLE 2**

This example illustrates the method of measuring the physical parameters of the masa sheet and calculating the peak force, extension, work and initial slope values.

Masa harina (55%), water (35%) and the pregelatinized starch of Example 1 (10%) were mixed in a Hobart Food Mixer, passed four times and folded in a 1 mm roller gap. The gap was then increased to 1.5 mm, passed once, then turned upside down and passed twice in order to provide even thickness throughout the roller width. The resultant sheet of dough was cut into a dog-bone shape, as shown below, for testing. Weak points were introduced to control breakage during extension in the form of 0.3-cm nicks on the side of each edge half way down the length of the sample. The dough extension was conducted parallel to the direction as the previous sheeting action. The sheet extension was done on a TA-XT2 (Texture Technologies Corp) instrument using a double clamp attachment. The sample was clamped on each side and pulled at a speed of 1 mm/s for 25 mm.

The force of extension measured on the dog-boned shape was then plotted against distance pulled and peak force, initial slope, distance at break and area under the curve were calculated. Graph 1, below, is plot of the force of extension versus the distance of a masa dough containing 10% pregelatinized sago starch. As illustrated below, peak force is the maximum value of the curve. Extension is measure of the distance at which the dough breaks. Work is the calculated area under the curve and initial slope is the slope of the curve at an extension distance of 1 mm.

Graph 1

## EXAMPLE 3

This example illustrates the measurement and calculation of the most desirable peak force, extension, work and initial slope characteristic of workable doughs via the comparison of a number of masa doughs formulated from pregelatinized starches prepared via the method of Example 1.

Several pregelatinized starches were prepared by the method of Example 1 from tapioca, potato, sago, cross-linked sago, acid hydrolyzed sago, waxy corn, and dent corn, wherein each base starch was slurried at three different pH's, 3.5, 6.5-7.0 and 9.0.

The pregelatinized starches thus obtained were formulated into masa doughs, sheeted and the peak force, initial slope extension and work calculated for each masa sheet according to the method described in Example 2. The resultant values are listed below in Table 1.

TABLE 1.

| pH during processing | Base Starch | Peak Force (g) | Initial Slope (g/mm) | Extension (mm) | Work (g-mm) |
|---|---|---|---|---|---|
| 3.5 | Tapioca | 116 | 39 | 14.1 | 1264 |
| | Potato | 141 | 52 | 8.0 | 820 |
| | Sago | 120 | 44 | 9.2 | 845 |
| | Waxy Corn | 84 | 27 | 16.9 | 1071 |
| | Dent Corn | 141 | 66 | 4.4 | 431 |

TABLE 1.   (continued)

| pH during processing | Base Starch | Peak Force (g) | Initial Slope (g/mm) | Extension (mm) | Work (g-mm) |
|---|---|---|---|---|---|
| 6.5-7.0 | Tapioca | 119 | 39 | 13.3 | 1266 |
|  | Potato | 135 | 44 | 10.3 | 1001 |
|  | Sago | 128 | 47 | 11.5 | 1156 |
|  | Cross-linked Sago | 103.8 | 43.4 | 7.95 | 325.2 |
|  | Acid hydrolyzed Sago | 126.2 | 51.5 | 4.45 | 488.7 |
|  | Waxy Corn | 83 | 25 | 15.2 | 850 |
|  | Dent Corn | 122 | 65 | 3.8 | 341 |
| 9.0 | Tapioca | 132 | 49 | 14.0 | 1473 |
|  | Potato | 171 | 64 | 9.2 | 1213 |
|  | Sago | 128 | 44 | 10.3 | 1037 |
|  | Waxy Corn | 82 | 24 | 14.0 | 950 |
|  | Dent Corn | 151 | 74 | 3.7 | 415 |

Doughs having a peak force of between about 100 to about 140 g, an extension of between about 9 to about 12 mm, a work area of between about 800 to about 1200 g-mm, and an initial slope of between about 40 to about 60 g/mm form acceptably elastic and workable doughs.

Doughs lying outside these defined ranges were not acceptably workable. Waxy corn and tapioca, at all pH's, formed doughs that were weak, wet, sticky and stringy. At the other extreme, maza dough formed from dent corn afforded an undesirably tough, dry, bucky and brittle dough. The data reported in Table 1 demonstrates that only sago and potato formed an acceptably workable dough according to the above identified parameters.


## EXAMPLE 4

This example illustrates the method of obtaining rheological data in order to define and measure the degree of structure of the pregelatinized starches of the present invention.

Rheological tests were conducted on starch dispersions obtained by applying a starch slurry to a heated drum surface and collecting a sample from a "sausage" formed on the drum as described in Example 1. The sample is adjusted to a solids content of about 20%, if necessary. The sample was allowed to cool to room temperature over five to ten minutes, applied directly to the rheometer and tested immediately. The rheometer was a Rheometrics Fluids Spectrometer II (Rheometrics Scientific, Piscataway, N.J.) All measurements were made using parallel plate geometry.

An oscillatory frequency sweep was conducted on the sample over a range of 100 rad/sec to 0.1 rad/sec, with a strain in the linear-viscoelastic window of the sample. The linear viscoelastic strain, $\gamma$, is defined as a strain which is small enough not to disrupt the structure of the material being tested. Resulting profiles of G', G" are measured and the tan delta is calculated from the ratio of G' to G".

The values of G', the elastic modulus, were plotted as a function of tangent delta for each pregelatinized starch and are depicted in Graph 2 below. It was found that a starch dispersion having a tangent delta above 1 described viscous or fluid-like samples. Conversely samples having a tangent delta below 0.1 fractured easily or were undesirably mushy or brittle depending upon their G' value.

The data depicted in Graph 2 demonstrates that the sago and potato starch dispersions which fell within the following parameters: a tangent delta above 0.1, particularly between a tangent delta of 0.2 and 1, and G' values above 200 Pa, particularly above 300 Pa, were desirably elastic. When incorporated into a dough, these starches formed a superior dough as defined by the properties identified in Example 3.

Graph 2

**EXAMPLE 5**

This example illustrates the superior physical properties of masa sheets made from a dough containing an amylose-containing starch wherein the corresponding amylose-containing starch dispersion prepared according to Example 4 has a tangent delta between 0.2 and 1 and a G' value of greater than 300 Pa.

Sago starch was drum dried according to the process in Example 1 and incorporated into a masa sheet according to the procedures described above. The resultant masa sheet was advantageously elastic, demonstrating a high resistance to breaking, and had a smooth even surface. The extension testing of the masa sheet resulted in an average value of 128 g for peak force and an extension of 11.5 mm, well within the preferred ranges for a desirable dough.

By contrast, corn starch, drum dried according to the Example 1 procedure, and incorporated into a masa dough gave a sheet that was difficult to form, easy to tear and had a rough surface. Peak force values of the unsatisfactory dough had an average value of 125 g. The dough also exhibited an extension of 4.5 mm, well outside the values suitable for an acceptable dough.

Thus, sago starch, having a tan delta value of 0.28 and a G' value of 650 Pa, as defined in Example 4, performs as a continuous binder in masa doughs affording a workable dough with advantageous commercial applications. In contrast, the brittle corn starch, having an undesirably low tan delta value of 0.07 and very high G' value of 2200, does not function suitably as a continuous binder in masa dough systems.

**Claims**

1.  A process for using an amylose-containing starch in dough as a suitable continuous matrix binder comprising an amylose-containing starch dispersion at a 20% solids content having a G' @ omega = 1 rad/sec of greater than about 200 Pascals, and a tangent delta of greater than about 0.1.

2.  The process of Claim 1 wherein G' is greater than about 300 Pascals, and tangent delta is between about 0.2 to about 1.0.

3. A process for making a suitable dough comprising adding to the dough an amyfose-containing starch wherein the resultant amylose starch-containing dough has a peak force of between about 140 to about 100 g; a slope of between about 40 to about 60 g/mm; an extension of between about 9 to about 12 mm; and a work area of between about 1200 to about 800 g-mm.

4. The process of claim 3 wherein the dough has a peak force of between about 130 to about 110 g, and the extension is between about 11 to about 12 mm.

5. The process of claims 1-4 wherein the amylose-containing starch is sago and potato.

6. A process for using the dough of claims 1-5 in food.

7. The process of claim 6 wherein the food is a fried or baked snack.

8. A dough binder comprising an amylose-containing starch at 20% solids content by weight having a G' @omega = 1 rad/sec of greater than about 200 Pascals and a tangent delta of greater than about 0.1.

9. The dough binder of claim 8 wherein G' is greater than about 300 Pascals, and tangent delta is between about 0.2 to about 1.0.

10. The dough binder of claims 8-9 wherein the starch is sago or potato.

# FIGURE 1

Peak Force (g)

Work (g-sec)

Initial Slope (g/mm)

Extension (mm)

•Tough
•Dry
•Bucky
•Brittle

•Tough
•Dry
•Bucky
•Brittle

•Tough
•Dry
•Bucky
•Brittle

•Tough
•Dry
•Bucky
•Brittle

•Weak
•Wet
•Sticky
•Stringy

Most Desirable

Acceptable

140  130  110  100

1200  800  40  60

12  11  9